# EUROPÄISCHE PATENTSCHRIFT

(11) **EP 1 468 583 B1**
(45) Veröffentlichungstag und Bekanntmachung des Hinweises auf die Patenterteilung: **04.01.2006**
(21) Anmeldenummer: 03702332.2
(22) Anmeldetag: 16.01.2003
(51) Int. Cl.: H04Q 7/38

(54) **DIGITALE MOBILFUNKKOMPONENTE ZUM SCHUTZ GEGEN UNERWÜNSCHTE DATEN**
DIGITAL MOBILE RADIO DEVICE FOR THE PROTECTION AGAINST UNDESIRED DATA
COMPOSANTE NUMERIQUE RADIO POUR LA PROTECTION CONTRE DES DONNEES INDESIRABLES

(30) Priorität: 16.01.2002 DE 10201627
(43) Veröffentlichungstag der Anmeldung: 20.10.2004
(73) Patentinhaber: Orga Kartensysteme GmbH, 33104 Paderborn (DE)
(72) Erfinder: ROHNER, Christoph, 33161 Hövelhof (DE)
(74) Vertreter: Richardt, Markus Albert
(86) Internationale Anmeldenummer: PCT/DE2003/000101
(87) Internationale Veröffentlichungsnummer: WO 2003/061319

(56) Entgegenhaltungen:
- EP-A- 1 033 652
- EP-A- 1 139 608
- WO-A-01/67785
- WO-A-99/16268

## Beschreibung

Die Erfindung betrifft eine digitale Mobilfunkkomponente zum Schutz gegen unerwünschte Daten in einem digitalen Mobilfunknetz sowie ein entsprechendes digitales Mobilfunknetz.

Aus dem Stand der Technik sind verschiedene Verfahren zum Schutz gegen unerwünschte Daten bekannt. Solche Verfahren werden beispielsweise angewendet um sogenannten Computer-Viren zu erkennen und mit solchen Computer Viren befallene Dateien wenn möglich zu reparieren. Solche Programme werden üblicherweise auf Personal Computern eingesetzt, um etwa per E-Mail empfangene Daten oder vom Internet heruntergeladene Daten auf Viren zu scannen.

Ein solches kommerziell erhältliches Virenschutzprogramm ist McAfee Virus Scan 6.0. Dieses Programm bietet Schutz gegen sogenannte "Würmer" sowie gegen "Hintertüren-Programme" und "Trojanische Pferde". Durch einen sogenannten Hintergrund-Wächter werden heruntergeladene Dateien sowie Java- und Active-X-Komponenten nach Viren durchsucht. Ferner erlaubt dieses Programm die Erstellung einer Report-Datei mit einer Anzeige der Virus Scan Aktivitätsprotokolle. Einen ähnlichen Leistungsumfang hat Norton AntiVirus 2002.

Ferner sind aus dem Stand der Technik sogenannten Content-Filter bekannt. Ein Content-Filter dient dazu, Inhalte, die aus dem Internet auf den Personal Computer geladen werden, zu überwachen und gegebenenfalls zu sperren. Zu einem Content-Filter gehört ein mehr oder weniger komplexes Regelwerk, welches die zu sperrenden Inhalte definiert.

Die Content-Filter Software wird i. a. als Inhaltsfilter zwischen das öffentliche Internet und den Endanwender geschaltet oder zwischen das Internet und ein Intranet.

Mit einem Content-Filter können eine Reihe von Schutzfunktionen ausgeübt werden:
- Content-Filter mit technischer Ausrichtung verhindern, dass Viren oder Spionage- und Sabotage-Programme aus dem Internet in privaten Netzen oder auf Workstations aktiv werden können.
- Minderjährige Computer-Benutzer oder Nutzer öffentlicher Web-Terminals sollen am Zugriff auf extremistische, pornographische oder generell menschenrechtsverachtende sowie auf ungeeignete kommerzielle Angebote gehindert werden. Diese Funktion wird von Betreibern frei zugänglicher Internet-Zugänge zum Beispiel in Bibliotheken eingesetzt, da diese Betreiber Schutzpflichten gegenüber den Nutzern der von ihnen zur Verfügung gestellten Terminals haben.
- Mitarbeiter von Unternehmen sollen daran gehindert werden, vom Arbeitsplatz aus bestimmte Angebote aufzurufen.
- Unternehmen wollen die E-Mail-Kommunikation ihrer Mitarbeiter überwachen, um bewussten oder versehentlichen Geheimnisverrat zu verhindern oder wiederum die private Nutzung einzuschränken.

Aus der WO 01/67 785 A2 ist eine Kommunikationssystemarchitektur und ein Verfahren zum Laden von Daten auf ein Mobilfunkgerät bekannt. Vor der Übertragung der Daten zu dem Mobilfunkgerät erfolgt durch das Kommunikationssystem eine Überprüfung der Daten.

Aus der EP 1 033 652 A2 ist ein Verfahren zum Herunterladen von Software von einem Server an einen Terminal bekannt. Die Überprüfung der Software erfolgt auf der Basis einer elektronischen Signatur.

Kommerziell erhältlich sind Content-Filter unter anderem von den Firmen Mc-Afee/Network Associates, Symantec und Biodata.

Der Erfindung liegt die Aufgabe zu Grunde eine digitale Mobilfunkkomponente und ein digitales Mobilfunknetz zu schaffen.

Die der Erfindung zu Grunde liegende Aufgabe wird jeweils mit den Merkmalen der unabhängigen Patentansprüche gelöst. Bevorzugte Ausführungsformen der Erfindung sind in den abhängigen Patentansprüchen angegeben.

Die Erfindung erlaubt es, einen Schutzmechanismus gegen unerwünschte Daten in einem digitalen Mobilfunknetz zu schaffen. Bevorzugte Anwendungsgebiete der vorliegenden Erfindung sind dabei der Schutz gegen Viren und gegen unerwünschten Content in einem digitalen Mobilfunknetz.

Die Erfindung kann für alle Mobilfunkgeräte eingesetzt werden, wie zum Beispiel sogenannte Handys, Personal Digital Assistents, Computer mit Mobilfunk-Schnittstelle, sogenannte Web-Pads oder andere Telekommunikationsgeräte mit einer Schnittstelle zu einem digitalen Mobilfunknetz. Neben der digitalen mobilen Telefonie erlauben solche Geräte oft verschiedene Datendienste, wie zum Beispiel Short Message Service (SMS). Ebenfalls erlauben heutige Mobilfunkgeräte oftmals auch das Herunterladen von zusätzlichen Programmen und Daten. Dabei kommt unter anderem eine als "Over the Air" (OTA) bezeichnete Technologie zum Einsatz.

Weitere digitale Mobilfunktechnologien, die solche Datendienste ermöglichen, sind unter anderem Time Division Multiple Access (TDMA), Code Division Multiple Access (CDMA), CDMA 2000, Universal Mobile Telecommunications System (UMTS), EDGE, GPRS und GSM.

Nach einer bevorzugten Ausführungsform der Erfindung werden die von einem Mobilfunkgerät angeforderten Daten auf Viren hin überprüft. Vorzugsweise erfolgt diese Überprüfung seitens des digitalen Mobilfunknetzes bevor die angeforderten Daten zu dem Mobilfunkgerät übertragen werden. Alternativ kann jedoch auch eine Überprüfung der bereits auf dem Mobilfunkgerät gespeicherten Daten erfolgen. Hierzu wird dann von dem digitalen Mobilfunknetz an das Mobilfunkgerät ein Programm für den Virus Scan übertragen.

Der Schutz der Mobilfunkgeräte vor Viren hat nicht nur für das einzelne Mobilfunkgerät eine Schutzwirkung, sondern auch für das digitale Mobilfunknetz insgesamt. Ein auf einem Mobilfunkgerät vorhandener Virus kann sich nämlich unter Umständen über das digitale Mobilfunknetz lawinenartig ausbreiten und eine Vielzahl anderer Mobilfunkgeräte und / oder Netzwerk-Komponenten befallen. Dadurch können große wirtschaftliche Schäden entstehen. Gegen diese Gefahr stellt die vorliegende Erfindung einen effektiven Schutzmechanismus zur Verfügung.

Ein solcher Schutzmechanismus ist besonders vorteilhaft für Mobilfunkgeräte, die einen unmittelbaren Zugriff auf das Internet erlauben, wie das etwa bei der UMTS Technologie der Fall ist.

Ein weiterer besonderer Vorteil der Erfindung liegt darin, dass die Mobilität des Nutzers durch den Schutzmechanismus gegen Viren nicht eingeschränkt wird, da auch der Virusschutz auf der Basis der Mobilfunk-Technologie erfindungsgemäß realisiert wird. Der Benutzer muss also sein Mobilfunkgerät nicht beispielsweise an einer Service-Stelle zur Überprüfung abgeben, in eine spezielle Docking Station bringen oder dergleichen, sondern eine Prüfung bzw. Korrektur der Daten kann jederzeit und ortsunabhängig durchgeführt werden.

Nach einer weiteren bevorzugten Ausführungsform der Erfindung dient der Schutz gegen unerwünschte Daten als.Content-Filter, um beispielsweise Kinder vor dem Herunterladen von nicht für Kinder bestimmte Daten über das digitale Mobilfunknetz zu schützen. Vorzugsweise wird ein Content-Filter automatisch von dem digitalen Mobilfunknetz gestartet, bevor Daten an einen Nutzer übertragen werden, um diese Daten auf unerwünschte Inhalte hin zu untersuchen.

Nach einer weiteren bevorzugten Ausführungsform der Erfindung wird auch ein Schutz gegen unerwünschte Daten, die von dem Mobilfunkgerät gesendet werden, realisiert. Beim Senden der Daten von dem Mobilfunkgerät werden diese Daten von dem Mobilfunkgerät selbst oder einer Mobilfunknetz-Komponente auf Viren und / oder unerwünschte Inhalte geprüft und eine Weiterleitung der Daten gegebenenfalls verhindert.

Nach einer weiteren Ausführungsform wird über das digitale Mobilfunknetz ein Programm zu dem Mobilfunkgerät übermittelt, so dass die Überprüfung von zu sendenden Daten seitens des Mobilfunkgeräts mittels dieses Programms selbst erfolgt.

Im Weiteren werden bevorzugte Ausführungsbeispiele der Erfindung mit Bezugnahme auf die Zeichnungen näher erläutert. Es zeigen:
- Figur 1: ein Blockdiagramm einer ersten Ausführungsform eines erfindungsgemäßen digitalen Mobilfunknetzes,
- Figur 2: eine zweite Ausführungsform des digitalen Mobilfunknetzes,
- Figur 3: eine Darstellung der Architektur eines Schutzmechanismus gegen unerwünschte Daten in einem digitalen Mobilfunknetz,
- Figur 4: ein Objekt-Relationen-Modell verschiedener Ausführungsformen des erfindungsgemäßen Schutzmechanismus,
- Figur 5: ein Flussdiagramm einer Ausführungsform des erfindungsgemäßen Verfahrens,
- Figur 6: ein Blockdiagramm einer Ausführungsform der erfindungsgemäßen digitalen Mobilfunk-Komponente.

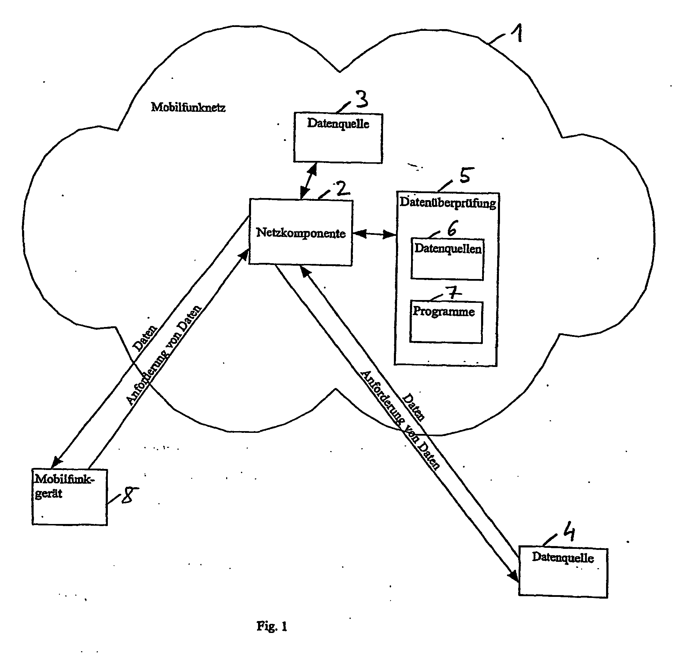

Die Figur 1 zeigt ein digitales Mobilfunknetz 1, welches beispielsweise nach dem GSM, UTMS, EDGE oder einem CDMA Standard arbeitet. Das Mobilfunknetz beinhaltet verschiedene Netzwerk-Komponenten, von denen hier der Übersicht halber nur die Netzkomponente 2 dargestellt ist.

Die Netzkomponente 2 kann unmittelbar auf eine Datenquelle 3 zugreifen oder über eine Netzwerkverbindung auf eine externe Datenquelle 4. Ferner kann die Netzkomponente 2 auf ein Modul 5 für die Datenüberprüfung zugreifen. Beispielsweise beinhaltet das Modul 5 einen Speicher 6, in dem vertrauenswürdige Datenquellen gespeichert sind. Beispielsweise sind die Datenquellen über deren Uniform Resource Locator (URL) gekennzeichnet.

Ferner beinhaltet das Modul 5 einen Speicher 7, in dem verschiedene Programme für die Datenüberprüfung abgelegt sind. Bei diesen Programmen in dem Speicher 7 kann es sich beispielsweise um Programme zur Durchführung eines Virus-Scans oder um Content-Filter handeln.

Das Mobilfunkgerät 8 kann über das digitale Mobilfunknetz 1 kommunizieren. Beispielsweise kann das Mobilfunkgerät 8 bestimmte Daten anfordern. Dies kann so erfolgen, dass beispielsweise über eine mittels des Mobilfunknetzes 1 aufgebaute Internet-Verbindung Daten von einer Datenquelle angefordert werden, die durch deren URL identifiziert wird.

Die Netzwerk-Komponente 2 initiiert eine Überprüfung der angeforderten Daten entweder bereits nach dem Empfang der Anforderung der Daten von dem Mobilfunkgerät 8, nach der Weiterleitung der Anforderung von Daten an die Datenquelle 4 oder 3, nach dem Empfang der Daten von der betreffenden Datenquelle oder auch nachdem die Daten bereits an das Mobilfunkgerät 8 weitergeleitet worden sind.

In dem in der Figur 1 gezeigten Anwendungsfall sendet das Mobilfunkgerät 8 eine Anforderung von Daten über das digitale Mobilfunknetz 1 ab. Diese Anforderung spezifiziert als Datenquelle die Datenquelle 4 mit deren URL. Für die Überprüfung der angeforderten Daten gibt es nun verschiedene Möglichkeiten:
- Die Netzwerk-Komponente 2 initiiert die Überprüfung der angeforderten Daten nach dem Empfang der Anforderung von dem Mobilfunkgerät 8. Dies kann so erfolgen, dass geprüft wird, ob die in der Anforderung spezifizierte Datenquelle 4 in dem Speicher 6 gelistet ist. Wenn dies der Fall ist, kann die Netzkomponente 2 die Datenquelle als vertrauenswürdig akzeptieren und auf eine weitere Überprüfung verzichten. Alternativ oder zusätzlich selektiert die Netzkomponente 2 eines oder mehrere der Programme aus dem Speicher 7 zur Durchführung der Überprüfung. Hierzu wird das oder die selektierten Programme in einen Arbeitsspeicher der Netzkomponente 2 geladen.
- Die Netzkomponente 2 initiiert die Überprüfung der angeforderten Daten, nachdem die Anforderung der Daten an die Datenquelle 4 weitergeleitet worden ist. In diesem Fall kann so vorgegangen werden, dass zunächst geprüft wird, ob die in der Anforderung spezifizierte Datenquelle in dem Speicher 6 gelistet ist. Wenn dies nicht der Fall ist, werden zusätzlich nach der Weiterleitung der Anforderung der Daten eines oder mehrere der Programme in dem Speicher 7 selektiert und in einen Arbeitsspeicher der Netzkomponente 2 für die vorzunehmende Überprüfung geladen.
- Die Netzkomponente 2 initiiert die Überprüfung der Daten nach dem Empfang der angeforderten Daten von der Datenquelle 4. Hierzu wird eines oder mehrere der Programme des Speichers 7 von der Netzkomponente 2 ausgeführt, um festzustellen, ob es sich bei den Daten um unerwünschte Daten handelt. Wenn dies der Fall ist, wird vorzugsweise geprüft, ob eine "Reparatur" der Daten möglich ist. Wenn dies der Fall ist, werden die Daten nach entsprechender Filterung an das Mobilfunkgerät 8 weitergeleitet.
- Die Netzkomponente 2 initiiert die Überprüfung der Daten seitens des Mobilfunkgeräts 8. Hierzu werden sowohl die angeforderten Daten von der Netzkomponente 2 an das Mobilfunkgerät 8 übertragen sowie auch ein oder mehrere Programme aus dem Speicher 7, so dass das Mobilfunkgerät 8 selbst die Überprüfung der Daten vornehmen kann.

Bei der Datenquelle 3 kann es sich beispielsweise um eine Datenquelle handeln, die von dem Betreiber des Mobilfunknetzes 1 selbst angeboten wird. Diese Datenquelle 3 wird dann vorzugsweise in den Speicher 6 als vertrauenswürdige Datenquelle eingetragen. Alternativ kann so vorgegangen werden, dass wenn Daten von der Datenquelle 3 angefordert werden, grundsätzlich eine Überprüfung der Daten unterbleibt, da ja die Datenquelle 3 von dem Betreiber des Mobilfunknetzes 1 kontrolliert wird.

Die Netzkomponente 2 kann aus mehreren verschiedenen Komponenten bestehen. Falls das digitale Mobilfunknetz als GSM Netz ausgebildet ist, gehört zu der Netzkomponente 2 vorzugsweise eine Vermittlungsstelle - ein sogenanntes Mobile Switching Center (MSC) - sowie ein an die MSC geschalteter OTA Server. In diesem Fall ist es vorteilhaft, wenn der OTA Server selbst die Überprüfung der Daten durch Zugriff auf das Modul 5 durchführt.

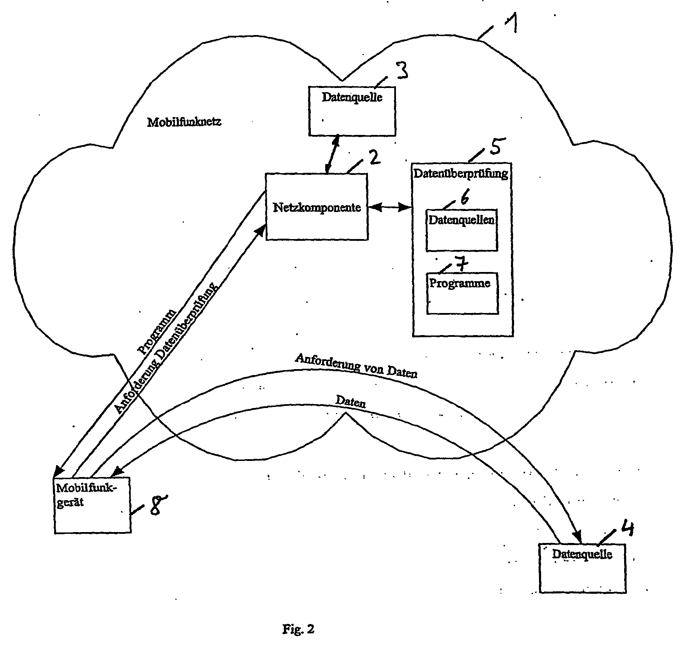

Die Figur 2 zeigt eine alternative Ausführungsform des digitalen Mobilfunknetzes 1 der Figur 1. Elemente der Figur 2, die Elementen der Figur 1 entsprechen, sind mit denselben Bezugszeichen gekennzeichnet.

Im Unterschied zu der Ausführungsform der Figur 1 wird die Überprüfung der Daten nicht durch das digitale Mobilfunknetz 1 selbst initiiert bzw. durch die Netzkomponente 2, sondern durch das Mobilfunkgerät 8. Das Mobilfunkgerät 8 richtet eine Anforderung von Daten über das digitale Mobilfunknetz 1 an die Datenquelle 4.

Diese Daten werden dann von der Datenquelle 4 an das Mobilfunkgerät 8 übertragen. Nach dem Empfang der Daten in dem Mobilfunkgerät 8 kann dieses automatisch oder nach einer entsprechenden Eingabe des Benutzers eine Anforderung zur Datenüberprüfung an das Mobilfunknetz 1 richten. Diese wird von der Netzkomponente 2 empfangen.

Vorzugsweise beinhaltet diese Anforderung zur Datenüberprüfung eine Angabe der Datenquelle 4, des Datentyps der zu überprüfenden Daten sowie der Art der gewünschten Überprüfung, das heißt eine Überprüfung auf Viren und / oder Content. Die Netzwerk-Komponente 2 greift dann auf das Modul 5 zu, um zu prüfen, ob die Datenquelle 4 in dem Speicher 6 vorhanden ist und/oder um ein oder mehrere Programme in dem Speicher 7 zu identifizieren.

Die Information, ob die Datenquelle 4 in dem Speicher 6 vorhanden ist und/oder das oder die Programm aus dem Speicher 7 werden dann von der Netzkomponente 2 an das Mobilfunkgerät 8 übermittelt, so dass dieses selbst die Überprüfung vornehmen kann. Eine solche Überprüfung ist auch dann möglich, wenn die Daten nicht über das digitale Mobilfunknetz 1 in das Mobilfunkgerät 8 geladen worden sind, sondern über einen anderen Weg, wie zum Beispiel unmittelbar über eine drahtlose oder eine drahtgebundene Schnittstelle z.B. von dem Personal Computer des Benutzers.

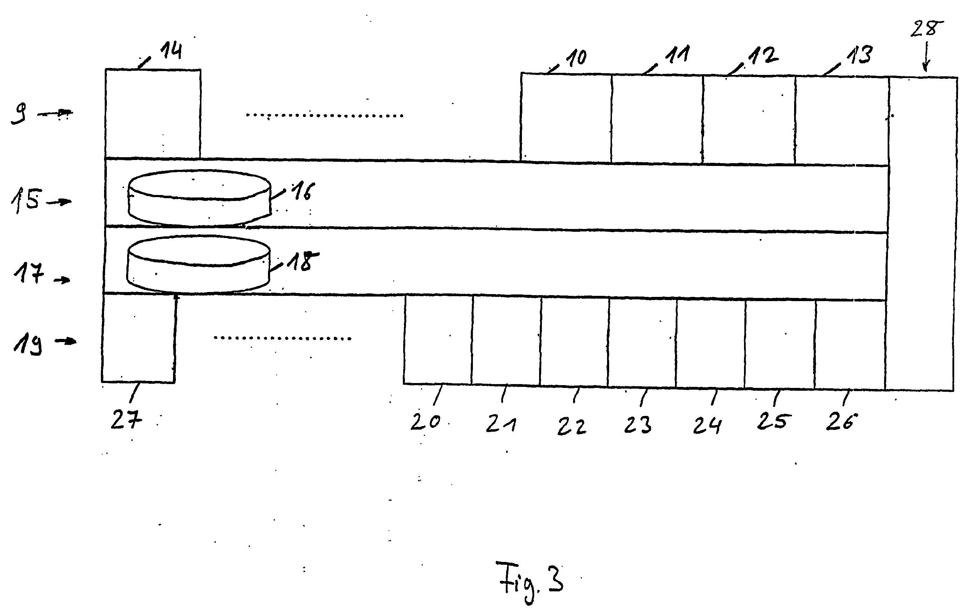

Die Figur 3 zeigt ein Ausführungsbeispiel einer Systemarchitektur eines digitalen Mobilfunknetzes mit einem Schutzmechanismus gegen unerwünschte Daten. Diese Architektur beihaltet verschiedene Schichten. Die Schicht 9 zeigt die von dem Schutzmechanismus unterstützten verschiedenen Mobilfunkgerätetypen. Hierbei handelt es sich beispielsweise um CDMA Geräte 10, UMTS Geräte 11, WAP Geräte 12 und Smart Cards 13 sowie weitere Gerätetypen 14.

Die Schicht 15 bezieht sich auf die eigentliche Überprüfung der Daten, das heißt beispielsweise den Virus Scan oder die Ausführung des Content-Filters. Die Schicht 15 kann so ausgebildet sein, dass für eine Überprüfung und/oder Reparatur von Daten benötigte Software von einer entfernten Datenquelle heruntergeladen werden kann.

Die Schicht 15 erlaubt ferner das Ergebnis einer Überprüfung zu Archivieren. Eine weitere vorteilhafte Funktion ist die Versendung von Erinnerungen an Benutzer hinsichtlich von Updates der für die Überprüfung eingesetzten Programme, erforderlichen neuen Überprüfungen, Warnungen oder anderen Service-Hinweisen sowie für statistische Zwecke.

Die Schicht 15 erlaubt es auch eine Überprüfung von auf einem Mobilfunkgerät gespeicherten Daten dann zu initiieren, wenn sich das Mobilfunkgerät in das digitale Mobilfunknetz einlogt. Hierzu hat die Schicht 15 ein Interface zu der Netzkomponente des digitalen Mobilfunknetzes, welches für die Registrierung zuständig ist, zum Beispiel das HOME LOCATION REGISTER (HLR) in GSM oder das HSS in UMTS.

Darüber hinaus kann die Schicht 15 eine Aufforderung an das Mobilfunkgerät senden, um den Benutzer zur Durchführung einer Überprüfung der Daten, wie zum Beispiel einen Virus Scan aufzufordern oder einen solchen automatisch zu initiieren. Vorteilhaft ist dabei die Verwendung dieser Aufforderung in Form eines Cookies oder in ähnlicher Form.

Die Schicht 15 beinhaltet eine Datenbank 16. Die Datenbank 16 dient zur Verwaltung einer Warteschlange von durch die Schicht 15 abzuarbeitende Datenüberprüfungen. Hierzu werden in der Datenbank 16 entsprechende Warteschlangen-Tabellen gespeichert, um die Zeitpunkte der Abarbeitung der einzelnen Überprüfungen festzulegen. Eine Überprüfung kann beispielsweise zu einem bestimmten vorgegebenen Zeitpunkt, aufgrund der Anforderung von Daten (sogenannter Download Request) oder aufgrund anderer Kriterien erfolgen.

Ferner beinhaltet die Datenbank 16 in vorteilhafter Weise weitere Tabellen und Informationen über durchgeführte Überprüfungen, deren Ergebnisse sowie Zeitpunkte der zuletzt vorgenommenen Überprüfungen für ein bestimmtes Mobilfunkgerät.

Die Schicht 17 dient zur Verwaltung und Aktualisierung der Datenbank 18, die die Programme zur Durchführung von Datenüberprüfungen beinhaltet. Beispielsweise beinhaltet die Datenbank 18 Programme und Informationen hinsichtlich der neuesten Viren und entsprechender Reparatur und / oder Reparatur und / oder Korrektur-Dateien.

Ferner kann die Datenbank 18 auch - je nach Anwendungsfall - Content-Filter oder andere Prüfprogramme beinhalten.

Vorzugweise hat die Schicht 17 ein elektronisches Interface und/oder ein grafisches Nutzerinterface für die Zwecke der automatischen oder manuellen Administrierung. Zum Beispiel können über dieses Interface automatisch Links zu Web Sites erstellt werden, um von dort neue Virus-Informationen zu Laden.

Vorzugweise beinhaltet die Datenbank 18 ergänzende Informationen über bekannte Viren, wie zum Beispiel deren Typ ID, Zeitstempel, Aktivitätszeitpunkt, sowie eine Beschreibung der durch die Viren bewirkten Effekte, die Gerätetypen, die von den Viren betroffen sind, Reparaturaktionen und dergleichen.

Die Schicht 19 beinhaltet die verschiedenen in Frage kommenden Übertragungsverfahren, wie zum Beispiel TDMA 20, CDMA 2000 21, CDMA 22, UMTS 23, EDGE 24, GPRS 25 GSM 26 und weitere Übertragungsverfahren 27.

Für die Übertragung von Daten können insbesondere die folgenden Methoden verwendet werden:
- Short Message Service (SMS) in GSM 26,
- CSD in GSM 26, einschließlich HSCSD,
- SMS über GPRS 25,
- CSD über GPRS 25, einschließlich HSCSD,
- ein in UMTS 23 zur Verfügung stehender Träger,
- ein in CDMA 21 oder 22 zur Verfügung stehender Träger oder
- andere Übertragungsverfahren.

Ferner können auch IS-41 und GAIT eingesetzt werden sowie Abwandlungen hiervon sowie auch solche Übertragungsverfahren, die für die 3 G und 4 G digitalen Mobilfunknetzwerke vorgesehen sind.

Die Schicht 28 realisiert eine Kommunikationsfunktion für die Kommunikation zwischen den einzelnen Schichten und die Protokollschnittstellen.

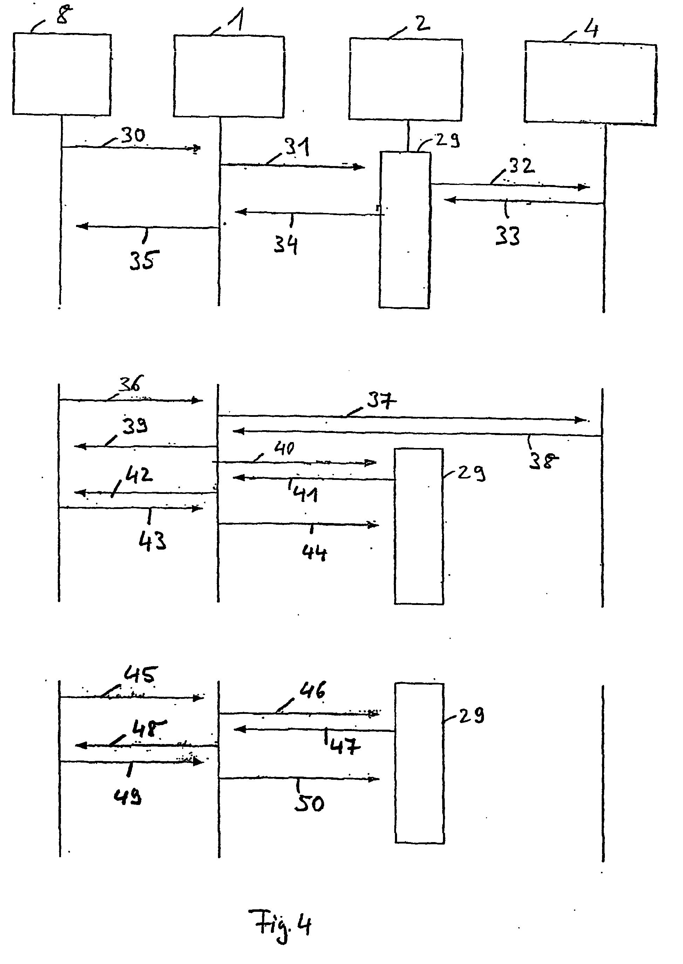

Die Figur 4 zeigt verschiedene Anwendungsfälle der vorliegenden Erfindung. Das Mobilfunkgerät 8 (vgl. Figuren 1 und 2) kommuniziert über das digitale Mobilfunknetzwerk 1, in dem sich die Netzkomponente 2 befindet. Bei der Netzkomponente 2 kann es sich um einen sogenannten OTA Server handeln, an den ein Modul 29 für die Überprüfung der Daten, das heißt den Schutz gegen Viren und/oder unerwünschte Inhalte befindet. Daneben sind verschiedene Datenquellen 4 vorhanden, die zum Beispiel über das Internet abgefragt werden können.

In dem Schritt 30 sendet das Mobilfunkgerät 8 eine Anforderung von Daten an das digitale Mobilfunknetz 1, über welches die Anforderung in dem Schritt 31 zum Modul 29 der Netzkomponente 2 gelangt. Von dort aus wird die Anforderung in dem Schritt 32 an die Datenquelle 4 weitergeleitet. In dem Schritt 33 werden die angeforderten Daten von der Datenquelle 4 empfangen. Das Modul 29 überprüft dann die von der Datenquelle 4 empfangenen Daten zum Beispiel auf einen Virus oder auf unerwünschten Content.

Wenn sich keine unerwünschten Daten in den von der Datenquelle 4 empfangenen Daten befinden, werden diese angeforderten Daten in dem Schritt 34 von dem Modul 29 über das digitale Mobilfunknetz 1 und von dort in dem Schritt 35 zu dem Mobilfunkgerät 8 übertragen. Wenn in dem Modul 29 unerwünschte Daten in den von der Datenquelle 4 in dem Schritt 33 empfangenen Daten gefunden werden, so gibt es mehrere Möglichkeiten:
- die angeforderten Daten werden nicht weitergeleitet,
- die Daten werden repariert und / oder es wird unerwünschter Content ausgefiltert; danach werden die angeforderten Daten weitergeleitet,
- die Daten werden nicht weitergeleitet, wenn ein Reparaturversucht fehl schlägt,

Im Weiteren wird ein alternatives Szenario beschrieben: In dem Schritt 36 fordert das Mobilfunkgerät 8 wiederum Daten an, indem es eine entsprechende Anforderung über das digitale Mobilfunknetz 1 unmittelbar an die Datenquelle 4 richtet. Von der Datenquelle 4 werden dann in dem Schritt 38 die angeforderten Daten geliefert und über das Mobilfunknetz 1 in dem Schritt 39 an das Mobilfunkgerät 8 übertragen.

In dem Schritt 40 richtet das Mobilfunknetz 1 an das Modul 29 eine Anfrage, um eine Überprüfung der von der Datenquelle 4 gelieferten Daten durchzuführen. Daraufhin wird von dem Modul 29 in dem Schritt 41 ein Programm zur Durchführung dieser Überprüfung geliefert. Hierbei kann es sich um Anti-Virusprogramm oder um einen Content-Filter handeln. In dem Schritt 42 wird dieses Programm von dem Mobilfunknetz 1 zu dem Mobilfunkgerät 8 übertragen. Das Mobilfunkgerät 8 führt dann die Überprüfung der Daten aus, indem es das empfangene Programm startet.

In dem Schritt 43 gibt das Mobilfunkgerät 8 dem digitalen Mobilfunknetz 1 eine Rückmeldung hinsichtlich des Ergebnisses der Überprüfung. Diese Rückmeldung wird in dem Schritt 44 an das Modul 29 weitergeleitet, um dort beispielsweise für statistische Zwecke ausgewertet zu werden.

Die Schritte 45 bis 50 zeigen ein weiteres alternatives Szenario. In diesem Szenario werden von dem Mobilfunkgerät 8 keine Daten angefordert, sondern es geht um die Überprüfung von auf dem Mobilfunkgerät 8 bereits vorhandenen Daten. Hierzu sendet das Mobilfunkgerät 8 in dem Schritt 45 eine Anforderung zur Durchführung einer Überprüfung der Daten an das Mobilfunknetz 1, von wo diese Anforderung in dem Schritt 46 an das Modul 29 weitergeleitet wird.

Das Modul 29 gibt daraufhin in dem Schritt 47 ein entsprechendes Programm aus, welches über das Mobilfunknetz 1 in dem Schritt 48 zu dem Mobilfunkgerät 8 übertragen wird. Dort wird dann die Überprüfung durchgeführt. Die Schritte 49 und 50 entsprechen den Schritten 43 und 44 in dem zuvor betrachteten Szenario.

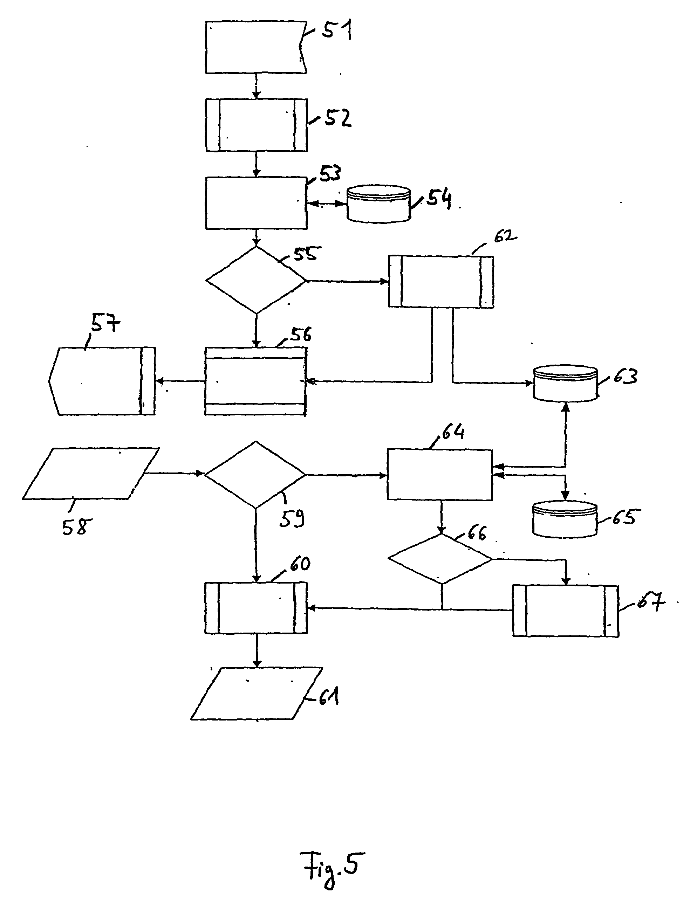

Die Figur 5 zeigt eine Ausführungsform des erfindungsgemäßen Verfahrens. In dem Schritt 51 gibt ein Mobilfunkgerät eine Anforderung von Daten ab. Diese Anforderung kann eine Datenquelle zum Beispiel durch Angabe der URL der Datenquelle beinhalten. Ferner beinhaltet die Anfrage Daten, die es erlauben die Identität des Netzwerk-Teilnehmers festzustellen. Hierbei kann es sich zum Beispiel um die Rufnummer, das heißt die MSISDN, oder die International Mobile Subscriber Identity Number (IMSI) oder ein anderes eineindeutiges Merkmal des Teilnehmers handeln.

In dem Schritt 52 wird der Status des Teilnehmers geprüft. Hierzu wird beispielsweise auf ein Benutzer-Profil des durch die Anforderung identifizierten Teilnehmers zugegriffen, um zu prüfen, ob für den Teilnehmer der Schutz gegen unerwünschte Daten aktiviert ist. Dies setzt zum Beispiel voraus, dass der Teilnehmer zuvor eine entsprechende Gebühr entrichtet hat oder sich zur Zahlung einer solchen vertraglich verpflichtet hat.

In dem Schritt 53 wird auf eine Datenbank 54 zugegriffen. In der Datenbank 54 befindet sich eine Tabelle von als vertrauenswürdig erachteten Datenquellen.

In dem Schritt 55 wird geprüft, ob die Datenquelle der Anforderung eine solche vertrauenswürdige Datenquelle ist oder nicht. Dies kann so erfolgen, dass geprüft wird, ob die URL der gewünschten Datenquelle in der Datenbank 54 vorhanden ist. Wenn dies der Fall ist , wird der Schritt 56 ausgeführt. In dem Schritt 56 wird die Anforderung von Daten erforderlichenfalls umformatiert und dann in dem Schritt 57 an die spezifizierte Datenquelle abgesendet.

In dem Schritt 58 werden die von der Datenquelle angeforderten Daten empfangen. In dem Schritt 59 wird nochmals geprüft, ob die in dem Schritt 58 empfangenen Daten vertrauenswürdig sind. Hierzu kann wiederum auf die Tabelle der Datenbank 54 zugegriffen werden.

Wenn dies der Fall ist, werden die angeforderten Daten in dem Schritt 60 zu dem Mobilfunkgerät, von dem die Anforderung von Daten abgegeben worden ist, übertragen, und dort in dem Schritt 61 empfangen.

Wenn die Prüfung in dem Schritt 55 ergibt, dass es sich bei der spezifizierten Datenquelle nicht um eine anerkannt vertrauenswürdige Datenquelle handelt, wird der Schritt 62 ausgeführt. Der Schritt 62 dient zur Initialisierung der Überprüfung der angeforderten Daten. Hierzu wird in der Datenbank 63 ein Element in einer Warteschlange generiert. Dieses Element identifiziert die Anforderung der Daten zum Beispiel mittels der Rufnummer oder der IMSI.

Nach dem Schritt 62 wird ferner der Schritt 56 ausgeführt.

Wenn die nochmalige Überprüfung in dem Schritt 59 ergibt, dass die Daten nicht vertrauenswürdig sind, so wird der Schritt 64 ausgeführt. In dem Schritt 64 werden die Elemente der Warteschlange der Datenbank 63 nacheinander abgearbeitet. Hierfür wird auf eine Datenbank 65 zugegriffen, welche die für die Überprüfung der Daten erforderlichen Programme und Informationen beinhaltet. Vorzugsweise wird dabei so vorgegangen, dass die Zeitdauer für die Anforderung der Daten von der Datenquelle in dem Schritt 57 bis zum Empfang der Daten in dem Schritt 58 genutzt wird, um das oder die für die Überprüfung der angeforderten Daten erforderlichen Programme in den Arbeitsspeicher zu laden. Auf diese Art und Weise kann die Überprüfung mit der kürzest möglichen zeitlichen Verzögerung durchgeführt werden.

Vorzugsweise beinhaltet jedes Element in der Warteschlange auch eine Angabe des Datentyps der angeforderten Daten, um entsprechend dieses Datentyps das oder die Programme aus der Datenbank 65 auszuwählen.

Nach der Bearbeitung des zu der Anforderung von Daten gehörenden Elements in der Warteschlange in dem Schritt 64 wird in dem Schritt 66 geprüft, ob sich unerwünschte Daten in den angeforderten Daten, die in dem Schritt 58 empfangen worden sind, befinden. Wenn dies nicht der Fall ist, so werden die angeforderten Daten in dem Schritt 60 zu dem Mobilfunkgerät übertragen.

Ist das Gegenteil der Fall, so werden die angeforderten Daten in dem Schritt 67 von den unerwünschten Daten befreit, indem von Viren befallene Dateien repariert bzw. unerwünschter Content ausgefiltert wird. Danach werden die "gereinigten" bzw. reparierten Daten in dem Schritt 60 an das Mobilfunkgerät übertragen.

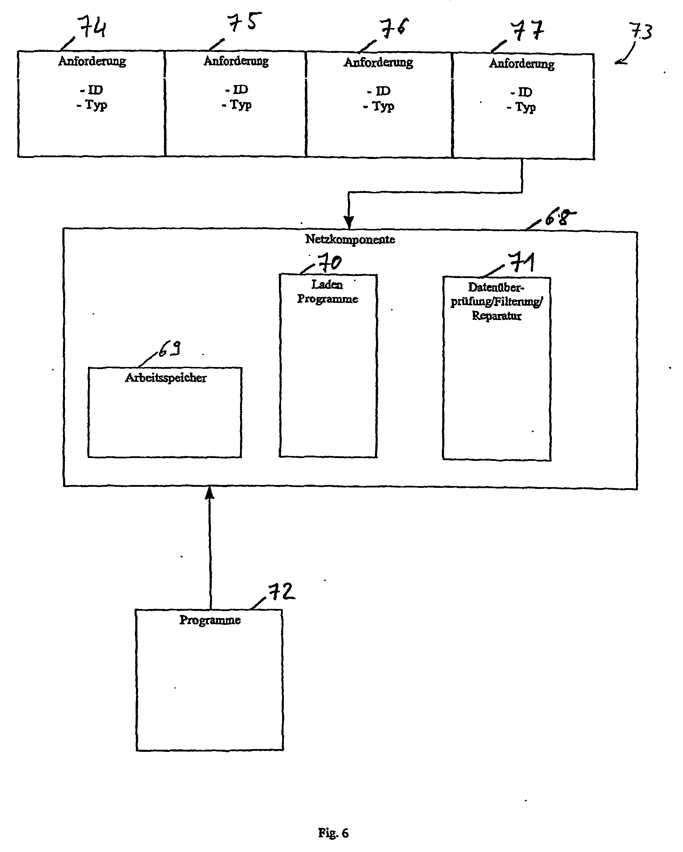

Die Figur 6 zeigt ein Blockdiagramm einer Netzkomponente 68, die zum Schutz gegen unerwünschte Daten dient. Die Netzkomponente 68 hat einen Arbeitsspeicher 69. Von der Netzkomponente 68 werden ein Prozess 70 zum Laden von Überprüfungs-Programmen und ein Prozess 71 für die Durchführung der eigentlichen Datenüberprüfung bzw. Filterung und Reparatur ausgeführt. Die Netzkomponente 68 ist mit einem Speicher 72 verbunden, in dem sich die Programme zum Schutz gegen unterschiedliche Arten von unerwünschten Daten, wie zum Beispiel Viren und unerwünschter Content befinden.

Ferner ist die Netzkomponente 68 mit einer Warteschlange 73 verknüpft. Die Warteschlange 73 beinhaltet die Elemente 74, 75, 76, und 77 sowie weitere der Übersichtlichkeit halber nicht gezeigte Elemente. Jedes Element der Warteschlange 73 gehört zu einer Anforderung von Daten eines Mobilfunkgeräts des digitalen Mobilfunknetzes. In jedem Element wird zu der Anforderung das Mobilfunkgerät identifiziert, von welchem die Anforderung stammt, zum Beispiel mittels dessen Rufnummer oder mittels dessen IMSI. Vorzugsweise wird ferner der Typ der angeforderten Daten in dem betreffenden Element angegeben.

Zu dem in der Figur 6 gezeigten Zeitpunkt wird von der Netzkomponente 68 die Anforderung 77 abgearbeitet. Hierzu werden über den Prozess 71 das oder die Programme in dem Arbeitsspeicher 69 abgearbeitet, die für die Überprüfung der angeforderten Daten verwendet werden. Zuvor sind diese Programme von dem Prozess 70 selektiert und aus dem Speicher 72 in den Arbeitsspeicher 69 übertragen worden.

Zur Erreichung eines möglichst optimalen Durchsatzes und möglichst kleiner Verzögerungszeiten erfolgt die Selektion und das Laden der Programme aus dem Speicher 72 in den Arbeitsspeicher 69 vorausschauend, das heißt der Prozess 70 betrachtet bereits eine oder mehrere Elemente vor dem aktuellen Element in der Warteschlange 73, um die spätere Überprüfung der Daten vorzubereiten.

Beispielsweise greift der Prozess 70 bereits auf das Element 76 zu, während das Element 77 noch bearbeitet wird. Der Prozess 70 ermittelt dann basierend auf dem Datentyp, der in dem Element 76 angegeben ist, das oder die erforderlichen Programme und lädt diese in den Arbeitsspeicher 69. Sobald das Element 77 abgearbeitet worden ist, ist dann das Element 76 an der Reihe, so dass unmittelbar das oder die Programme in dem Arbeitsspeicher 69 ohne zeitliche Verzögerung gestartet werden können. Je nach Implementierung kann der Prozess 70 auch weitere Elemente der Warteschleife 73 vorausschauend berücksichtigen, wie zum Beispiel die Elemente 75 und 74.

### Bezugzeichenliste

- digitales Mobilfunknetz: 1
- Netzkomponente: 2
- Datenquelle: 3
- Datenquelle: 4
- Modul: 5
- Speicher: 6
- Speicher: 7
- Mobilfunkgerät: 8
- Schicht: 9
- CDMA Geräte: 10
- UMTS Geräte: 11
- WAP Geräte: 12
- Smart Card: 13
- Gerätetypen: 14
- Schicht: 15
- Datenbank: 16
- Schicht: 17
- Datenbank: 18
- Schicht: 19
- TDMA: 20
- CDMA 2000: 21
- CDMA: 22
- UMTS: 23
- EDGE: 24
- GPRS: 25
- GSM: 26
- Übertragungsverfahren: 27
- Schicht: 28
- Modul: 29
- Datenbank: 54
- Datenbank: 63
- Datenbank: 64
- Netzkomponente: 68
- Arbeitsspeicher: 69
- Prozess: 70
- Prozess: 71
- Speicher: 72
- Warteschlange: 73
- Element: 74
- Element: 75
- Element: 76
- Element: 77

## Patentansprüche

1. Digitale Mobilfunkkomponente zum Schutz gegen unerwünschte Daten in einem digitalen Mobilfunknetz (1), wobei die Mobilfunkkomponente (2; 68) Mittel (71) zur Überprüfung beinhaltet, ob es sich bei von einem Mobilfunkgerät angeforderten Daten um unerwünschte Daten handelt,
**gekennzeichnet durch**
- Mittel zur Generierung eines Elements (74, 75, 76, 77) in einer Warteschlange (73), wobei jedes Element zu einer Anforderung von Daten eines Mobilfunkgeräts (8) des digitalen Mobilfunknetzes (1) gehört, **durch** jedes Element das Mobilfunkgerät identifiziert wird, von dem die betreffende Anforderung stammt, und **durch** jedes Element ein Datentyp der angeforderten Daten angegeben wird,
- Mittel (70) zur Auswahl des einen oder der mehreren Programme in Abhängigkeit eines Datentyps der angeforderten Daten, und zum Laden von einem oder mehreren der ausgewählten Programme aus einem Speicher (72) in einen Arbeitsspeicher (69) zur Durchführung der Überprüfung,
wobei die Mittel (70) zur Auswahl und zum Laden zur vorausschauenden Auswahl und zum vorausschauenden Laden des oder der Programme in den Arbeitsspeicher für ein Element der Warteschlange, bevor auf das Element in der Warteschlange zugegriffen wird, ausgebildet sind.

2. Digitale Mobilfunkkomponente nach Anspruch 1, wobei die Mittel zur Überprüfung so ausgebildet sind, dass eine Überprüfung statt findet, bevor die Daten an das Mobilfunkgerät übertragen werden.

3. Digitale Mobilfunkkomponente nach Anspruch 1 oder 2, mit Mitteln zum Zugriff auf ein Nutzerprofil, wobei das Nutzerprofil eine Angabe beinhaltet, ob für einen Nutzer eine Überprüfung von angeforderten Daten vorzunehmen ist.

4. Digitales Mobilfunknetz mit einer Vermittlungsstelle an die eine digitale Mobilfunkkomponente nach einem der vorhergehenden Ansprüche 1 bis 3 gekoppelt ist, so dass eine Anforderung von Daten, die von einem Mobilfunkgerät empfangen worden ist, von der Vermittlungsstelle an die digitale Mobilfunkkomponente weitergeleitet wird.

## Claims

1. A digital mobile radio component for protection against unwanted data in a digital mobile radio network (1), the mobile radio component (2; 68) comprising means (71) for verifying whether data requested from a mobile radio set are unwanted data,
**characterised by**
- means for generating an element (74, 75, 76, 77) in a queue (73), where each element belongs to a request for data from a mobile radio set (8) within the digital mobile radio network (1), each element identifies the mobile radio set from which the request concerned originates, and each element indicates a data type in respect of the requested data,
- means (70) for selecting the one or more programs in dependence on a data type in respect of the requested data, and for loading one or more of the selected programs from a memory (72) into a working memory (69) for performing the verification check,
the means (70) for selecting and for loading being configured for preview selection and for preview loading of the program or programs into the working memory for an element in the queue, before the element in the queue is accessed.

2. Digital mobile radio component according to claim 1, where the means of verification are configured in such a way that a verification check takes place before the data are transmitted to the mobile radio set.

3. Digital mobile radio component according to claim 1 or 2, having means for accessing a user profile, the user profile containing information as to whether a verification check of requested data is to be undertaken in respect of a user.

4. Digital mobile radio network having an exchange to which a digital mobile radio component according to any one of the preceding claims 1 to 3 is coupled, with the result that a request for data that has been received by a mobile radio set is forwarded on from the exchange to the digital mobile radio component.

## Revendications

1. Composant numérique de radiocommunication mobile pour la protection contre des données indésirables dans un réseau numérique radio (1), le composant radio mobile (2 ; 68) comprenant des moyens (71) permettant de vérifier s'il s'agit de données indésirables dans le cas de données exigées par un appareil radio mobile,
**caractérisé par**
- des moyens pour générer un élément (74, 75, 76, 77) dans une file d'attente (73), chaque élément appartenant à une exigence de données d'un appareil radio mobile (8) du réseau numérique radio mobile (1), l'appareil radio mobile duquel émane l'exigence concernée étant identifié par chaque élément et un type de données exigées étant indiqué par chaque élément,
- des moyens (70) pour sélectionner un ou plusieurs programme(s) en fonction d'un type de données des données exigées et pour charger un ou plusieurs programme(s) choisi(s) à partir d'une mémoire (72) dans une mémoire de travail (69) permettant de procéder au contrôle,
les moyens (70) pour choisir et pour charger étant conçus pour choisir au préalable et pour charger au préalable le ou les programme(s) dans la mémoire de travail pour un élément de la file d'attente avant de pouvoir accéder à l'élément se trouvant dans cette file.

2. Composant numérique de radiocommunication mobile selon la revendication 1,
**caractérisé en ce que**
les moyens pour le contrôle sont conçus de manière à ce qu'un contrôle ait lieu avant que les données ne soient transférées à l'appareil radio mobile.

3. Composant numérique de radiocommunication mobile selon la revendication 1 ou 2, doté de moyens pour accéder à un profil utilisateur comprenant une indication sur la nécessité ou non pour un utilisateur de procéder au contrôle des données exigées.

4. Réseau numérique radio mobile doté d'un point de commutation sur lequel est couplé un composant numérique de radiocommunication mobile suivant l'une quelconque des revendications précédentes 1 à 3,
**caractérisé en ce qu'**
une exigence de données reçue par un appareil radio mobile soit transmise du point de commutation au composant numérique de radiocommunication mobile.
